# EUROPÄISCHE PATENTANMELDUNG

(11) **EP 2 546 812 A1**
(43) Veröffentlichungstag der Anmeldung: **16.01.2013**
(21) Anmeldenummer: 11005742.9
(22) Anmeldetag: 14.07.2011
(51) Int. Cl.: G07G 1/14, G06Q 20/00

(54) **Verfahren mit einem optischen Gutscheincode**

(71) Anmelder: UMS - United Mobility Services AG, 80333 München (DE)
(72) Erfinder: Wahl, Albert, Dr., 82031 Grünwald (DE); Holzapfel, Xaver, 82031 Grünwald (DE); Schmiedler, Robert, 65189 Wiesbaden (DE); Teufel, Thomas, 78582 Balgheim (DE)
(74) Vertreter: Daub, Thomas

(57) **Zusammenfassung**

Die Erfindung geht aus von einem Verfahren mit einem System (10), das zumindest eine Kassenrecheneinheit (12) aufweist, die zumindest einen optischen Produktcode zur Erstellung eines Rechnungsbetrags erfasst.

Es wird vorgeschlagen, dass das System (10) eine mobile Kundenrecheneinheit (14) aufweist, die einen optischen Gutscheincode (16) darstellt, der von der Kassenrecheneinheit (12) zur Reduzierung des Rechnungsbetrags um einen Wert erfasst wird.

## Beschreibung

### Stand der Technik

Die Erfindung betrifft ein Verfahren nach dem Oberbegriff des Anspruchs 1.

Es ist bereits ein Verfahren mit einem System vorgeschlagen worden, das zumindest eine Kassenrecheneinheit aufweist, die zumindest einen optischen Produktcode zur Erstellung eines Rechnungsbetrags erfasst.

### Vorteile der Erfindung

Die Erfindung geht aus von einem Verfahren mit einem System, das zumindest eine Kassenrecheneinheit aufweist, die zumindest einen optischen Produktcode zur Erstellung eines Rechnungsbetrags erfasst.

Es wird vorgeschlagen, dass das System eine mobile Kundenrecheneinheit aufweist, die einen optischen Gutscheincode darstellt, der von der Kassenrecheneinheit zur Reduzierung des Rechnungsbetrags um einen Wert erfasst wird. Unter einem "System" sollen in diesem Zusammenhang insbesondere mehrere Einheiten verstanden werden, die zur Initialisierung eines Bezahl- oder Auszahlvorgangs miteinander kommunizieren und die vorteilhaft zumindest teilweise räumlich verteilt angeordnet sind. Vorzugsweise kommunizieren mindestens zwei, vorzugsweise drei der Einheiten des Systems zumindest teilweise über das Internet. Insbesondere soll unter einer "Kassenrecheneinheit" eine Recheneinheit verstanden werden, die bei einem Einkaufsvorgang einen zu zahlenden Rechnungsbetrag ermittelt. Vorzugsweise erfasst die Kassenrecheneinheit zur Bestimmung des Rechnungsbetrags zumindest einen optischen Produktcode zumindest eines zum Kauf ausgewählten Produkts. Alternativ oder zusätzlich könnte die Kassenrecheneinheit einem Käufer Produkte zur Auswahl anzeigen und einen Rechnungsbetrag von ausgewählten Produkten anzeigen. Beispielsweise könnte die Kassenrecheneinheit als ein Server ausgebildet sein, der ein Produkt mittels einer Übertragung über das Internet einem Kunden anbietet und nach einer Auswahl von mindestens einem Produkt einen Rechnungsbetrag von ausgewählten Produkten anzeigt. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm und/oder Berechnungsroutinen auf. Vorzugsweise sind die Bauteile der Recheneinheit in einem gemeinsamen Gehäuse angeordnet. Unter einem "optischen Code" soll insbesondere ein Code verstanden werden, der dazu vorgesehen ist, mittels eines insbesondere sichtbaren Lichts, ausgelesen zu werden. Vorzugsweise ist der Code als ein, dem Fachmann als sinnvoll erscheinender optischer Code, vorteilhaft jedoch als ein Strichcode und/oder besonders vorteilhaft als ein zweidimensionaler optischer Code ausgebildet. Vorzugsweise umfasst der optische Code, den die Kassenrecheneinheit zur Erstellung eines Rechnungsbetrags erfasst, zumindest eine Identifikationskennzeichnung, die einer Produktart zugeordnet ist, wobei vorteilhaft erst die Kassenrecheneinheit der Produktart einen Preis zuordnet. Insbesondere soll unter einer "Erstellung eines Rechnungsbetrags" ein Vorgang verstanden werden, bei dem ein Betrag oder mehrere Beträge zu einem von einem Käufer zu zahlenden Betrag zusammengezählt werden. Unter dem Begriff "erfassen" soll in diesem Zusammenhang insbesondere verstanden werden, dass die Kassenrecheneinheit eine Struktur des optischen Codes bestimmt und die in der Struktur enthaltenen Informationen des optischen Codes dekodiert. Vorzugsweise erfasst die Kassenrecheneinheit von dem optischen Code reflektiertes und/oder ausgesendetes Licht. Alternativ oder zusätzlich könnte die Kassenrecheneinheit eine Struktur eines per Bilddatei übertragenen Bilds bestimmen. Insbesondere soll unter einer "mobilen Kundenrecheneinheit" eine von dem Kunden kontrollierte Recheneinheit verstanden werden, die zumindest dazu vorgesehen ist, den optischen Gutscheincode von der Kassenrecheneinheit erfassbar insbesondere auf einem Display der Kundenrecheneinheit darzustellen. Alternativ oder zusätzlich könnte die mobile Kundenrecheneinheit dazu vorgesehen sein, den optischen Gutscheincode als Bilddatei über das Internet an die Kassenrecheneinheit zu versenden. Vorteilhaft ist die mobile Kommunikationseinheit als eine, dem Fachmann als sinnvoll erscheinende Einheit, vorteilhaft jedoch als ein Notebook, als ein Taschencomputer, als ein Mobiltelefon, als ein Tablet-PC und/oder besonders vorteilhaft als ein Smartphone ausgebildet. Vorzugsweise wird die mobile Kundenrecheneinheit zur Initialisierung eines Bezahlvorgangs in einen Erfassungsbereich der Kassenrecheneinheit hinein bewegt. Alternativ könnte die mobile Kundenrecheneinheit den optischen Code als eine digitale Bilddatei an die Kassenrecheneinheit senden. Vorzugsweise kommuniziert die mobile Kommunikationseinheit zumindest teilweise drahtlos, und zwar insbesondere über ein Mobilfunknetz Unter einem "optischen Gutscheincode" soll insbesondere ein optischer Code verstanden werden, der zumindest eine Identifikationskennzeichnung aufweist, die einem Wert, der einen Rechnungsbetrag reduziert, zugeordnet ist. Vorzugsweise weist der optische Gutscheincode eine Information über den Wert auf. Vorteilhaft ist die mobile Kundenrecheneinheit dazu vorgesehen, den optischen Gutscheincode zumindest teilweise zu dekodieren. Vorzugsweise ist die Kassenrecheneinheit dazu vorgesehen, den optischen Gutscheincode zumindest teilweise zu dekodieren. Vorzugsweise weist der optische Gutscheincode zumindest eine verschlüsselte Information auf. Insbesondere soll unter der Wendung "Reduzierung des Rechnungsbetrags um einen Wert" verstanden werden, dass die Kassenrecheneinheit nach einem erfassen des optischen Gutscheincodes einen von dem optischen Gutscheincode abhängigen Wert von dem Rechnungsbetrag abzieht. Vorzugsweise ist der optische Gutscheincode einem festen Wert zugeordnet. Insbesondere ist der Wert, um den die Kassenrecheneinheit den Rechnungsbetrag reduziert maximal so groß wie der Rechnungsbetrag. Insbesondere könnte die Kassenrecheneinheit den Rechnungsbetrag von dem optischen Gutscheincode abhängig auf null reduzieren. Beispielsweise könnte der optische Gutscheincode einen Rechnungsbetrag für ein Essen auf null reduzieren, insbesondere ohne dass dem Kunden der Rechnungsbetrag bekannt ist. Alternativ oder zusätzlich ist der Wert von dem Rechnungsbetrag abhängig. Beispielsweise könnte der optische Gutscheincode eine Information aufweisen, die die Kassenrecheneinheit veranlasst den Rechnungsbetrag um einen Prozentsatz zu reduzieren. Durch die erfindungsgemäße Ausgestaltung des Verfahrens kann besonders komfortabel, sicher und zeitgemäß eine vorteilhafte Kundenbindung, eine vorteilhafte Kundengewinnung und/oder eine vorteilhafte Mitarbeiterbildung erreicht werden. Durch den optischen Code kann konstruktiv einfach eine besonders sichere Schnittstelle zwischen dem Kunden und einem Gutscheinausgeber bereitgestellt werden. Insbesondere ist keine direkte elektrische Verbindung zwischen der Kassenrecheneinheit und der mobilen Kundenrecheneinheit notwendig.

In einer weiteren Ausgestaltung wird vorgeschlagen, dass der optische Gutscheincode zumindest eine Information aufweist, die eine Art des Werts beschreibt, wodurch konstruktiv einfach unterschiedliche Gutscheinarten bereitgestellt werden können. Insbesondere kann die Art des Werts vor der mobilen Kundenrecheneinheit ohne eine Kommunikation mit einer Systemrecheneinheit an den Kunden ausgegeben werden. Alternativ oder vorzugsweise zusätzlich könnte eine Systemrecheneinheit dem optischen Gutscheincode die Art des Werts zuordnen. Insbesondere soll unter einer "Art des Werts" eine Information verstanden werden, die beschreibt, auf welche Weise die Kassenrecheneinheit den Rechnungsbetrag reduziert. Vorzugsweise reduziert die Kassenrecheneinheit den Rechnungsbetrag auf eine, dem Fachmann als sinnvoll erscheinende Art, vorzugsweise jedoch um einen Prozentsatz, um einen dem optischen Gutscheincode zugeordneten Wert und/oder auf null. Beispielsweise könnte der Wert des optischen Gutscheincodes einer bestimmten Warengruppe, beispielsweise einem Lebensmittel, zugeordnet sein. Vorzugsweise weist der optische Gutscheincode eine Information auf, die eine Währung des Werts des optischen Gutscheincodes kennzeichnet.

Des Weiteren wird vorgeschlagen, dass der optische Gutscheincode zumindest eine Information aufweist, die einen Gültigkeitszeitraum des optischen Gutscheincodes beschreibt, wodurch nur für einen Zeitraum gültige Gutscheincodes bereitgestellt werden können. Insbesondere kann der Gültigkeitszeitraum vor der mobilen Kundenrecheneinheit ohne eine Kommunikation mit einer Systemrecheneinheit an den Kunden ausgegeben werden. Alternativ oder vorzugsweise zusätzlich könnte eine Systemrecheneinheit dem optischen Gutscheincode den Gültigkeitszeitraum zuordnen. Unter einem "Gültigkeitszeitraum" soll insbesondere ein Zeitraum verstanden werden, in dem die Kassenrecheneinheit den optischen Gutscheincode zur Reduzierung eines Rechnungsbetrags akzeptiert.

Ferner wird vorgeschlagen, dass die mobile Kundenrecheneinheit als ein Mobiltelefon ausgebildet ist, wodurch mit einem geringen technischen Aufwand eine hohe Kundenakzeptanz erreicht werden kann. Insbesondere soll unter einem "Mobiltelefon" ein mobiles Gerät verstanden werden, das dazu vorgesehen ist, eine Verbindung zur drahtlosen Übertragung einer Sprache und insbesondere zur drahtlosen Übertragung von Informationen des optischen Codes herzustellen.

Zudem wird vorgeschlagen, dass die mobile Kundenrecheneinheit eine Information des optischen Gutscheincodes drahtlos empfängt, wodurch eine besonders große Flexibilität erreicht werden kann. Insbesondere ist weitgehend ortsunabhängig eine Kommunikation mit einer Systemrecheneinheit zur Verifizierung des optischen Gutscheincodes möglich. Unter einer "Information des optischen Gutscheincodes" soll insbesondere eine in den optischen Gutscheincode codierte Information verstanden werden, vorzugsweise jedoch zumindest ein Wert des Gutscheincodes.

Weiterhin wird vorgeschlagen, dass die mobile Kundenrecheneinheit den optischen Gutscheincode auf einem Display der mobilen Kundenrecheneinheit darstellt, wodurch eine konstruktiv besonders einfache Umsetzung möglich ist.

In einer vorteilhaften Ausbildung der Erfindung wird vorgeschlagen, dass das System eine Systemrecheneinheit aufweist, die dem optischen Gutscheincode einen Wert zuordnet, wodurch eine unabhängige Überprüfung und Erstellung von Gutscheincodes möglich ist. Insbesondere soll unter einer "Systemrecheneinheit" eine Recheneinheit verstanden werden, die Beschreibungen von optischen Gutscheincodes von mehreren Kunden und mehreren Gutscheinausgebern verwaltet. Vorzugsweise erstellt die Systemrecheneinheit von einer Anforderung des Gutscheinausgebers abhängig die Beschreibung des Gutscheincodes. Vorzugsweise speichert die Systemrecheneinheit eine Identifikationskennzeichnung des Gutscheincodes, eine Art eines Werts des Gutscheincodes, eine Identität eines Kunden dem der Gutscheincode zugesendet wurde, eine Identität eines Gutscheinausgebers, und/oder andere, dem Fachmann als sinnvoll erscheinende Kenngrößen. Vorzugsweise umfasst die Systemrecheneinheit zumindest einen insbesondere über das Internet kommunizierenden Server. Vorzugsweise weist die Systemrecheneinheit eine Datenbank auf, die die Identifikationskennzeichnung des Gutscheincodes und zumindest den Wert des optischen Gutscheincodes speichert. Unter der Wendung "einen Wert zuordnen" soll in diesem Zusammenhang insbesondere verstanden werden, dass die Systemrecheneinheit zumindest die Identifikationskennzeichnung des Gutscheincodes und den Wert des Gutscheincodes einander zuordenbar speichert. Insbesondere soll unter einer "Beschreibung des optischen Gutscheincodes" ein Datensatz verstanden werden, der Informationen zur Darstellung eines optischen Codes aufweist. Vorzugsweise ist die Beschreibung des optischen Gutscheincodes als eine Bilddatei, insbesondere in einem, dem Fachmann als sinnvoll erscheinenden Format, beispielsweise Portable Network Graphics (.png) oder Graphics Interchange Format (.gif), ausgebildet. Alternativ oder zusätzlich berechnet die mobile Kundenrecheneinheit, insbesondere gemäß einem, dem Fachmann als sinnvoll erscheinenden Verfahren, aus der Beschreibung des optischen Gutscheincodes den optischen Gutscheincode und stellt diesen vorteilhaft auf einem Display der mobilen Kundenrecheneinheit dar. Unter "drahtlos" soll insbesondere verstanden werden, dass das Datenübertragungsmittel dazu vorgesehen ist, die Beschreibung über einen vorteilhaft körperlosen Informationstrüger, beispielsweise über Schall-, Licht- und/oder vorzugsweise Funkwellen, zu empfangen. Vorzugsweise ordnet die Systemrecheneinheit den optischen Gutscheincode über einen Identifizierungscode und/oder über eine Telefonnummer der mobilen Kundenrecheneinheit dem Kunden zu. Vorzugsweise schützt die mobile Kundenrecheneinheit den Zugriff auf den optischen Code mittels eines, dem Fachmann als sinnvoll erscheinenden Verfahrens, vorzugsweise jedoch über eine Gesichtserkennung, eine Iriserkennung, einen Fingerabdruck und/oder besonders bevorzugt über einen PIN.

Des Weiteren wird vorgeschlagen, dass die Systemrecheneinheit dem optischen Gutscheincode zumindest eine Kundeninformation zuordnet, wodurch eine Verwendung des Gutscheincodes auf einen Kunden beschränkt werden kann. Insbesondere soll unter einer "Kundeninformation" eine Information verstanden werden, die die Identifikationskennzeichnung des Gutscheincodes mit einer Identität des Kunden verknüpft.

Ferner wird vorgeschlagen, dass die mobile Kundenrecheneinheit Beschreibungen eines ersten und eines zweiten optischen Gutscheincodes an die Systemrecheneinheit sendet und die Systemrecheneinheit mit Beschreibung eines dritten optischen Gutscheincodes antwortet und dem dritten optischen Gutscheincode einen Wert zuordnet, der von einem Wert des ersten und des zweiten optischen Gutscheincodes abhängig ist, wodurch eine besonders flexible Nutzung des Gutscheincodes möglich ist. Vorzugsweise wird dem dritten optischen Gutscheincode ein Wert zugeordnet, der zumindest im Wesentlichen so groß ist, wie ein Wert des ersten und des zweiten optischen Gutscheincodes zusammengezählt. Unter "zumindest im Wesentlichen" soll hier weniger als 10 % abweichend verstanden werden. Alternativ oder zusätzlich könnte die mobile Kundenrecheneinheit der Systemrecheneinheit einen ersten Gutscheincode senden und die Systemrecheneinheit mit zwei optischen Gutscheincodes antworten, deren Gesamtwert von dem ersten Gutscheincode anhängig ist. Das heißt insbesondere, dass die Systemrecheneinheit den ersten optischen Gutscheincode in zwei optische Gutscheincodes aufteilt.

Des Weiteren wird vorgeschlagen, dass die mobile Kundenrecheneinheit eine Beschreibung eines optischen Gutscheincods zumindest teilweise an die Systemrecheneinheit sendet und die Systemrecheneinheit den optischen Gutscheincode einem anderen Kunden zuordnet, wodurch der optische Gutscheincode konstruktiv einfach weitergegeben werden kann. Vorzugsweise fordert die Systemrecheneinheit von dem ursprünglichen Besitzer des optischen Gutscheincodes eine Bestätigung zur Weitergabe des optischen Gutscheincodes an. Vorteilhaft erfasst die mobile Kundenrecheneinheit vor einer Übertragung des Gutscheincodes den zu übertragenen Gutscheincode optisch.

Zudem wird vorgeschlagen, dass die Kassenrecheneinheit eine Beschreibung des optischen Gutscheincodes an die Systemrecheneinheit sendet und die Systemrecheneinheit zumindest mit einer Informationen über einen Wert des optischen Gutscheincodes antwortet, wodurch konstruktiv einfach eine Kontrolle des Gutscheincodes erreicht werden kann.

Weiterhin wird vorgeschlagen, dass die Systemrecheneinheit an die Kassenrecheneinheit eine Beschreibung eines optischen Bezahlcodes sendet, wodurch mit geringem technischem Aufwand ein besonders komfortabler und flexibler Bezahlvorgang möglich ist. Unter einem "BezaHcode" soll insbesondere ein optischer Code verstanden werden, zur Initialisierung eines Bezahlvorgangs der von der mobilen Kundenrecheneinheit erfasst wird.

In einer vorteilhaften Ausbildung der Erfindung wird vorgeschlagen, dass die mobile Kundenrecheneinheit, eine Kameravorrichtung aufweist, die zur Initialisierung eines Bezahlvorgangs einen von der Kassenrecheneinheit dargestellten optischen Bezahlcode erfasst. Unter einer "Kameravorrichtung" soll insbesondere eine Vorrichtung verstanden werden, die zumindest dazu vorgesehen ist, in einem sichtbaren Lichtbereich ein Aussehen von Oberflächen zu erfassen. Insbesondere soll unter der Wendung "zur Initialisierung eines Bezahlvorgangs" verstanden werden, dass der Bediener der mobilen Kommunikationseinheit durch eine Erfassung des optischen Codes mittels der Kameravorrichtung einen Bezahlvorgang startet. Durch den optischen Bezahlcode und die Kameravorrichtung kann konstruktiv einfach eine besonders sichere Schnittstelle zwischen Empfänger und Geber eines Bezahlvorgangs bereitgestellt werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Beschreibung des Ausführungsbeispiels

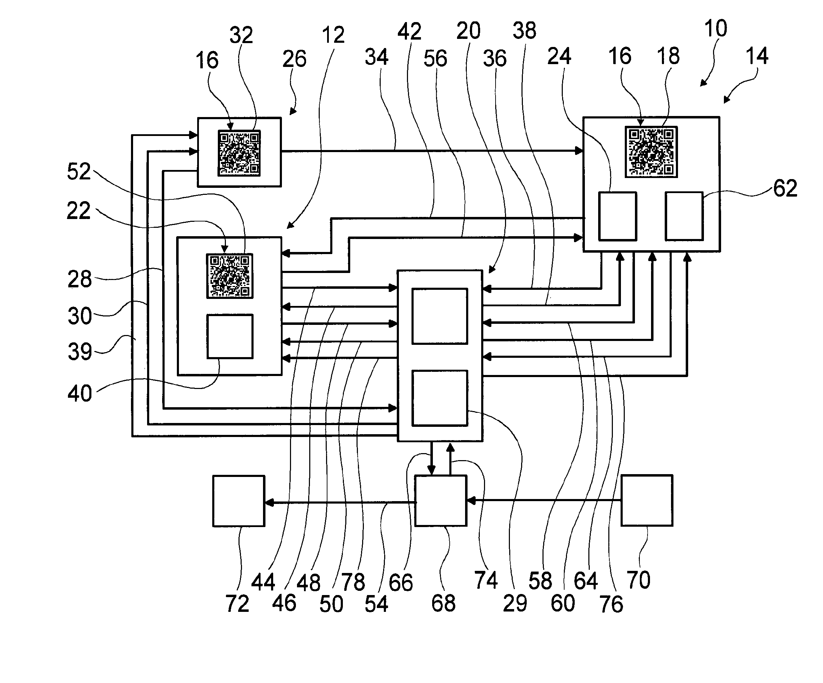

Die Figur zeigt schematisch ein erfindungsgemäßes System 10 mit einer Kassenrecheneinheit 12, einer mobilen Kundenrecheneinheit 14, einer Systemrecheneinheit 20 und einem Kommunikationsmittel 26. Zudem zeigt die Figur ein erfindungsgemäßes Verfahren, wie das System 10 untereinander kommuniziert. Die Kassenrecheneinheit 1 2 und das Kommunikationsmittel 26 sind von einem Gutscheinausgeber kontrolliert. Die mobile Kundenrecheneinheit 14 ist von einem Kunden kontrolliert, der von dem Gutscheinausgeber einen optischen Gutscheincode 16 empfangt. Die mobile Kundenrecheneinheit 14 ist als ein Mobiltelefon ausgebildet. Der optische Gutscheincode 16 ist als ein QR-Code ausgebildet.

Das Kommunikationsmittel 26 fordert in einer ersten Kommunikation 28 den optischen Gutscheincode 16 von der Systemrecheneinheit 20 an. Dazu sendet das Kommunikationsmittel 26 einen Wert, eine Art des Werts, einen Gültigkeitszeitraum, eine Identifikation des Gutscheinausgebers und/oder ggf. eine Identifikation der mobilen Kundenrecheneinheit 14 bzw. des Kunden an die Systemrecheneinheit 20. Die Systemrecheneinheit 20 ordnet diesen Informationen eine Identifikationskennzeichnung des optischen Gutscheincodes 16 zu. Zudem kodiert die Systemrecheneinheit 20 zumindest die Identifikationskennzeichnung in den optischen Gutscheincode 16. Die Systemrecheneinheit 20 speichert die Identifikationskennzeichnung und die zugeordneten Informationen in einer Datenbank 29 der Systemrecheneinheit 20.

Die Systemrecheneinheit 20 erstellt eine Beschreibung des optischen Gutscheincodes 16. In einer weiteren Kommunikation 30 sendet die Systemrecheneinheit 20 die Beschreibung des optischen Gutscheincodes 16 an das Kommunikationsmittel 26. Das Kommunikationsmittel 26 stellt den optischen Gutscheincode 16 der mobilen Kundenrecheneinheit 14 zur optischen Erfassung 34 zur Verfügung. Beispielsweise könnte das Kommunikationsmittel 26 den optischen Gutscheincode 16 auf eine Fläche drucken, die später dem Kunden zugänglich ist, beispielsweise auf ein Produkt und/oder auf eine Innenseite eines Flaschendeckels, die Beschreibung des optischen Gutscheincodes 16 elektronisch der mobilen Kundenrecheneinheit 14 senden und/oder auf einem anderen, dem Fachmann als sinnvoll erscheinenden Weg verbreiten. In diesem Ausführungsbeispiel ist das Kommunikationsmittel 26 als ein Pfandautomat ausgebildet, der von einem Wert des Pfands abhängig den optischen Gutscheincode 16 anfordert und auf einem Display 32 des Kommunikationsmittels 26 darstellt. Alternativ oder zusätzlich könnte ein Kommunikationsmittel zumindest teilweise einstückig mit einer Kassenrecheneinheit ausgebildet sein.

Die mobile Kundenrecheneinheit 14 erfasst mittels einer Kameravorrichtung 24 der mobilen Kundenrecheneinheit 14 den optischen Gutscheincode 16 und speichert diesen. Die mobile Kundenrecheneinheit 14 sendet zumindest die Identifikationskennzeichnung des optischen Gutscheincodes 16 in einer nächsten Kommunikation 36 an die Systemrecheneinheit 20. Hier sendet die mobile Kundenrecheneinheit 14 die Identifikationskennzeichnung drahtlos über ein Mobilfunknetz zur Systemrecheneinheit 20. Die Systemrecheneinheit 20 antwortet in einer weiteren Kommunikation 38 zumindest mit einer Information über einen Wert des optischen Gutscheincodes 16. Die mobile Kundenrecheneinheit 14 empfängt die Daten der Systemrecheneinheit 20 drahtlos. Die Systemrecheneinheit 20 ordnet der Identifikationskennzeichnung des optischen Gutscheincodes 16 eine Identifikation der mobilen Kundenrecheneinheit 14 bzw. des Kunden zu. Die mobile Kundenrecheneinheit 14 weist ein Display 18 auf, auf dem dem Kunden der Wert des optischen Gutscheincodes 16, die Art des Werts, eine Identität des Gutscheinausgebers sowie weitere, dem Fachmann als sinnvoll erscheinende Informationen angezeigt werden. Des Weiteren wird der optische Gutscheincode 16 dargestellt. Die Systemrecheneinheit 20 meldet in einer weiteren Kommunikation 39 dem Kommunikationsmittel 26 eine Information über einen Erfolg der Zuordnung des optischen Gutscheincodes 16. Das Kommunikationsmittel 26 zeigt dem Kunden die Information über den Erfolg der Zuordnung des optischen Gutscheincodes 16 an.

Die Kassenrecheneinheit 12 weist eine Kameravorrichtung 40 auf. Mit der Kameravorrichtung 40 erfasst die Kassenrecheneinheit 12 zur Erstellung eines Rechnungsbetrags zumindest einen hier nicht näher dargestellten optischen Produktcode von zumindest einem nicht näher dargestellten Produkt. Alternativ könnte kein optischer Produktcode von einem Produkt erfasst werden und ein Wert des optischen Gutscheincodes 16 ausbezahlt werden. Die mobile Kundenrecheneinheit 14 stellt auf dem Display 18 der mobilen Kundenrecheneinheit 14 den optischen Gutscheincode 16 dar. Die Kassenrecheneinheit 12 erfasst den optischen Gutscheincode 16 von dem Display 18 der mobilen Kundenrecheneinheit 14 mittels einer optischen Erfassung 42. Die Kassenrecheneinheit 1 2 sendet in einer weiteren Kommunikation 44 zumindest die Identifikationskennzeichnung des optischen Gutscheincodes 16 an die Systemrecheneinheit 20. Um Betrugsversuche schnell erkennen zu können sendet die Kassenrecheneinheit 12 zudem einen Wert des optischen Gutscheincodes 16 an die Systemrecheneinheit 20. Die Systemrecheneinheit 20 bestätigt der Kassenrecheneinheit 12 eine Richtigkeit des optischen Gutscheincodes 16 in einer nächsten Kommunikation 46. Des Weiteren ordnet die Systemrecheneinheit 20 der Identifikationskennzeichnung des optischen Gutscheincodes 16 eine Kenngröße zu, die den optischen Gutscheincode 16 entwertet.

In einer weiteren Kommunikation 48 fordert die Kassenrecheneinheit 12 von der Systemrecheneinheit 20 eine Beschreibung eines optischen Bezahlcodes 22 mit einem Wert an, der um den Wert des optischen Gutscheincodes 16 reduziert wurde. Die Systemrecheneinheit 20 erstellt einen optischen Bezahlcode 22 und sendet diesen in einer nächsten Kommunikation 50 an die Kassenrecheneinheit 12. Die Kassenrecheneinheit 12 stellt den optischen Bezahlcode 22 auf einem Display 52 der Kassenrecheneinheit 12 dar. Zur Initialisierung eines Bezahlvorgangs 54 erfasst die mobile Kundenrecheneinheit 14 durch eine optische Erfassung 56 den optischen Bezahlcode 22.

Die mobile Kundenrecheneinheit 14 sendet bei einer Kommunikation 58 zumindest eine Identifikationskennzeichnung des optischen Bezahlcodes 22 an die Systemrecheneinheit 20. Die Systemrecheneinheit 20 überprüft den optischen Bezahlcode 22 und sendet bei einer folgenden Kommunikation 60 zumindest einen Wert des optischen Bezahlcodes 22 an die mobile Kundenrecheneinheit 14. Die mobile Kundenrecheneinheit 14 weist ein Bedienelement 62 auf, mittels dessen der Kunde eine Anweisung des Bezahlvorgangs 54 bestätigt. In einer nächsten Kommunikation 64 sendet die mobile Kundenrecheneinheit 14 eine Bestätigung der Anweisung des Bezahlvorgangs 54 an die Systemrecheneinheit 20. Die Systemrecheneinheit 20 sendet in einer weiteren Kommunikation 66 die Anweisung an ein Banksystem 68 des Systems 10. Das Banksystem 68 überträgt bei dem Bezahlvorgangs 54 den reduzierten Rechungsbetrag von einem Konto 70 eines Kunden auf ein Konto 72 eines Gutscheinausgebers. Das Banksystem 68 sendet der Systemrecheneinheit 20 in einer nächten Kommunikation 74 einer Information über einen Erfolg des Bezahlvorgangs 54. Die Systemrecheneinheit 20 leitet diese Information in einer Kommunikation 76 an die mobile Kundenrecheneinheit 14 weiter. Des Weiteren leitet die Systemrecheneinheit 20 diese Information in einer Kommunikation 78 an die Kassenrecheneinheit 12 weiter. Die mobile Kundenrecheneinheit 14 und die Kassenrecheneinheit 12 zeigen dem Kunden die Information an.

In einem Weiteren in der Figur nicht näher dargestellten Verfahrensschritt sendet die mobile Kundenrecheneinheit 14 Beschreibungen eines ersten und eines zweiten optischen Gutscheincodes an die Systemrecheneinheit 20. Die Systemrecheneinheit 20 antwortet mit Beschreibung eines dritten optischen Gutscheincodes. Die Systemrecheneinheit 20 ordnet dem dritten optischen Gutscheincode einen Wert zu, der einem Wert des ersten und des zweiten optischen Gutscheincodes entspricht. Die Systemrecheneinheit 20 kennzeichnet den ersten optischen Gutscheincode und den zweiten optischen Gutscheincode als ungültig.

In einem in der Figur ebenfalls nicht näher dargestellten Verfahrensschritt sendet die mobile Kundenrecheneinheit 14 eine Identifikationskennzeichnung des optischen Gutscheincodes 16 an die Systemrecheneinheit 20 und die Systemrecheneinheit 20 ordnet den optischen Gutscheincode 16 einem anderen Kunden zu. Vorzugsweise erfasst eine mobile Kundenrecheneinheit 14 eines Kunden, der den optischen Gutscheincode 16 erhalten soll dazu den optischen Gutscheincode 16. Die Systemrecheneinheit 20 fordert bei einer mobilen Kundenrecheneinheit, der der Gutscheincode bisher zugeordnet war, eine Erlaubnis an, den optischen Gutscheincode 16 zu übertragen.

### Bezugszeichen

- 10: System
- 12: Kassenrecheneinheit
- 14: Kundenrecheneinheit
- 16: Gutscheincode
- 18: Display
- 20: Systemrecheneinheit
- 22: Bezahlcode
- 24: Kameravorrichtung
- 26: Kommunikationsmittel
- 28: Kommunikation
- 29: Datenbank
- 30: Kommunikation
- 32: Display
- 34: Erfassung
- 36: Kommunikation
- 38: Kommunikation
- 39: Kommunikation
- 40: Kameravorrichtung
- 42: Erfassung

- 44: Kommunikation
- 46: Kommunikation
- 48: Kommunikation
- 50: Kommunikation
- 52: Display
- 54: Bezahlvorgang
- 56: Erfassung
- 58: Kommunikation
- 60: Kommunikation
- 62: Bedienelement
- 64: Kommunikation
- 66: Kommunikation
- 68: Banksystem
- 70: Konto
- 72: Konto
- 74: Kommunikation
- 76: Kommunikation
- 78: Kommunikation

## Patentansprüche

1. Verfahren mit einem System (10), das zumindest eine Kassenrecheneinheit (12) aufweist, die zumindest einen optischen Produktcode zur Erstellung eines Rechnungsbetrags erfasst,
**dadurch gekennzeichnet, dass**
das System (10) eine mobile Kundenrecheneinheit (14) aufweist, die einen optischen Gutscheincode (16) darstellt, der von der Kassenrecheneinheit (12) zur Reduzierung des Rechnungsbetrags um einen Wert erfasst wird.

2. Verfahren nach Anspruch 1,
**dadurch gekennzeichnet, dass**
der optische Gutscheincode (16) zumindest eine Information aufweist, die eine Art des Werts beschreibt.

3. Verfahren nach Anspruch 1 oder 2,
**dadurch gekennzeichnet, dass**
der optische Gutscheincode (16) zumindest eine Information aufweist, die einen Gültigkeitszeitraum des optischen Gutscheincodes (16) beschreibt.

4. Verfahren nach einem der vorhergehenden Ansprüche,
**dadurch gekennzeichnet, dass**
die mobile Kundenrecheneinheit (14) als ein Mobiltelefon ausgebildet ist.

5. Verfahren nach einem der vorhergehenden Ansprüche,
**dadurch gekennzeichnet, dass**
die mobile Kundenrecheneinheit (14) eine Information des optischen Gutscheincodes (16) drahtlos empfängt.

6. Verfahren nach einem der vorhergehenden Ansprüche,
**dadurch gekennzeichnet, dass**
die mobile Kundenrecheneinheit (14) den optischen Gutscheincode (16) auf einem Display (18) der mobilen Kundenrecheneinheit (14) darstellt.

7. Verfahren nach einem der vorhergehenden Ansprüche,
**dadurch gekennzeichnet, dass**
das System (10) eine Systemrecheneinheit (20) aufweist, die dem optischen Gutscheincode (16) einen Wert zuordnet.

8. Verfahren nach Anspruch 7,
**dadurch gekennzeichnet, dass**
die Systemrecheneinheit (20) dem optischen Gutscheincode (16) zumindest eine Kundeninformation zuordnet.

9. Verfahren zumindest nach Anspruch 7,
**dadurch gekennzeichnet, dass**
die mobile Kundenrecheneinheit (14) Beschreibungen eines ersten und eines zweiten optischen Gutscheincodes an die Systemrecheneinheit (20) sendet und die Systemrecheneinheit (20) mit Beschreibung eines dritten optischen Gutscheincodes antwortet und dem dritten optischen Gutscheincode einen Wert zuordnet, der von einem Wert des ersten und des zweiten optischen Gutscheincodes abhängig ist.

10. Verfahren zumindest nach Anspruch 7,
**dadurch gekennzeichnet, dass**
die mobile Kundenrecheneinheit (14) eine Beschreibung des optischen Gutscheincodes (16) zumindest teilweise an die Systemrecheneinheit (20) sendet und die Systemrecheneinheit (20) den optischen Gutscheincode (16) einem anderen Kunden zuordnet.

11. Verfahren zumindest nach Anspruch 7,
**dadurch gekennzeichnet, dass**
die Kassenrecheneinheit (12) eine Beschreibung des optischen Gutscheincodes (16) an die Systemrecheneinheit (20) sendet und die Systemrecheneinheit (20) zumindest mit einer Information über einen Wert des optischen Gutscheincodes (16) antwortet.

12. Verfahren zumindest nach Anspruch 7,
**dadurch gekennzeichnet, dass**
die Systemrecheneinheit (20) an die Kassenrecheneinheit (12) eine Beschreibung eines optischen Bezahlcodes (22) sendet.

13. Verfahren zumindest nach Anspruch 7,
**dadurch gekennzeichnet, dass**
die mobile Kundenrecheneinheit (14), eine Kameravorrichtung (24) aufweist, die zur Initialisierung eines Bezahlvorgangs einen von der Kassenrecheneinheit (12) dargestellten optischen Bezahlcode (22) erfasst.

14. System zur Durchführung eines Verfahrens nach einem der vorhergehenden Ansprüche.

15. Kundenrecheneinheit eines Systems nach Anspruch 14.

16. Kassenrecheneinheit zur Durchführung eines Verfahrens nach einem der Ansprüche 1 bis 13.

17. Systemrecheneinheit zur Durchführung eines Verfahrens zumindest nach Anspruch 7.
